# FASCICULE DE BREVET EUROPEEN

(11) **EP 2 323 962 B1**
(45) Date de publication et mention de la délivrance du brevet: **01.11.2017**
(21) Numéro de dépôt: 09748400.0
(22) Date de dépôt: 17.09.2009
(51) Int. Cl.: C06B 21/00, C06B 31/00

(54) **PROCEDE D'OBTENTION DE CRISTAUX D'ADN PAR CRISTALLISATION EN MILIEU VISQUEUX**
VERFAHREN ZUM ERHALT VON ADN-KRISTALLEN DURCH KRISTALLISATION IN VISKOSEM MEDIUM
METHOD FOR OBTAINING ADN CRYSTALS THROUGH CRYSTALLIZATION IN A VISCOUS MEDIUM

(30) Priorité: 18.09.2008 FR 0856269
(43) Date de publication de la demande: 25.05.2011
(73) Titulaire: HERAKLES, 33185 Le Haillan (FR); Eurenco, 91300 Massy (FR)
(72) Inventeur: MUSCATELLI, Florent, F-91710 Vert Le Petit (FR); RENOUARD, Joël, F-77630 Saint Martin En Biere (FR); BOUCHEZ, Jean-Marc, F-91610 Ballancourt Sur Essonne (FR)
(74) Mandataire: Le Roux, Martine
(86) Numéro de dépôt international: PCT/FR2009/051744
(87) Numéro de publication internationale: WO 2010/031962

(56) Documents cités:
- EP-A- 1 256 558
- WO-A-97/47571
- WO-A-2006/108991
- DE-A1- 3 527 200
- DE-C1- 3 920 999
- FR-A- 2 886 641
- US-A- 3 222 231
- US-A- 4 544 769
- TREIVUS E B: "On the choice of solvent for crystallization" JOURNAL OF CRYSTAL GROWTH 1994 OCT 2 ELSEVIER SCIENCE PUBLISHERS B.V., vol. 143, no. 3-4, 2 octobre 1994 (1994-10-02), pages 369-370, XP002530876
- STORM T D ET AL: "Some effects of solvent properties on nucleation" JOURNAL OF CRYSTAL GROWTH, ELSEVIER, AMSTERDAM, NL, vol. 7, no. 1, 1 juillet 1970 (1970-07-01) , pages 55-60, XP023184973 ISSN: 0022-0248 [extrait le 1970-07-01]

## Description

La présente invention a pour objet un procédé d'obtention de cristaux de dinitroamidure d'ammonium.

Les cristaux obtenus par ledit procédé présentent une forme cristallisée à faible rapport d'allongement médian dans une granulométrie adaptée à la formulation des matériaux énergétiques. Ceci est ci-après explicité en détail.

Le dinitroamidure d'ammonium répond à la formule : NH₄N(NO₂)₂. Il est plus communément appelé : "ammonium dinitramide" et connu sous la dénomination: "ADN" (Ammonium DiNitramide).

Il est tout particulièrement connu comme charge oxydante, dépourvue de chlore, susceptible de remplacer le perchlorate d'ammonium dans les compositions de propergols.

Diverses voies de synthèse dudit ADN ont été proposées (elles ont été rappelées par Wang Guogiang, Chen Hong et Ma Yuanying, dans Theory Pract. Energ. Mater., [Proc. Int. Autumn Semin. Propellants, Explos. Pyrotech.] (1996) 85-91 (Chemical Abstract: 126: 106102)).

On en met en oeuvre principalement deux:
- la voie dite uréthanne: la nitration et le traitement de l'uréthanne conduisent au sel d'ammonium du N-nitrouréthanne (ANU). Ce sel est ensuite nitré en continu par N₂O₅ pour former le dérivé N,N-dinitré non isolé et mis directement à réagir avec l'ammoniac pour former l'ADN et régénérer l'uréthanne (voie illustrée dans le brevet US 5 714 714) ;
- la voie dite sulfamate: le sulfamate d'ammonium ou de potassium est nitré par un mélange sulfonitrique à basse température puis le milieu réactionnel est neutralisé et généralement concentré (voie illustrée dans le brevet US 5 976 483).

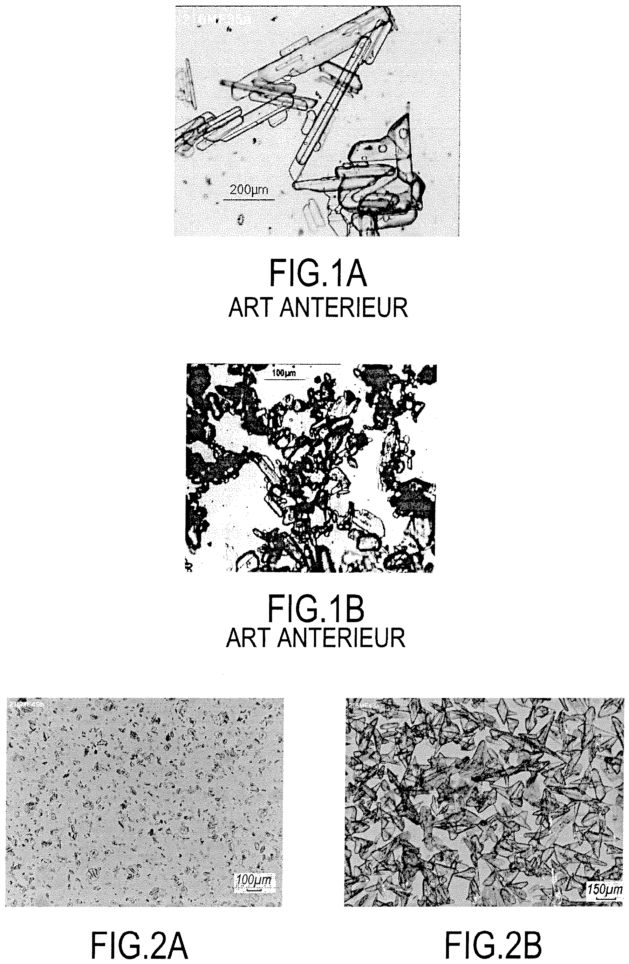

A l'issue de l'une quelconque de ces voies de synthèse, l'ADN, obtenu en solution, est cristallisé, de façon classique (par concentration, par addition d'un non-solvant et/ou par refroidissement...). Les cristaux d'ADN brut obtenus se présentent sous la forme de bâtonnets, voire d'aiguilles. De tels bâtonnets ou aiguilles sont montrés sur la figure 1A annexée (photographie prise au microscope optique à transmission). Ils présentent un rapport d'allongement d'environ 10.

Une telle morphologie de ses cristaux rend l'ADN impropre à la formulation, car la faisabilité des compositions est fortement compromise du fait de la forte augmentation de viscosité dès que l'on vise des taux de charge importants.

En référence au problème technique rappelé ci-dessus, plusieurs procédés ont été décrits pour obtenir le composant ADN sous une géométrie quasi sphérique dans une granulométrie adaptée à la formulation des matériaux énergétiques. Il a notamment été préconisé de reconditionner ses cristaux sous forme de granulés sphériques. L'homme du métier emploie le terme de "prills". Lesdits "prills" (lesdits granulés sphériques) sont obtenus, soit en fondant l'ADN sous vive agitation dans un liquide non solvant et en refroidissant ensuite rapidement, soit en utilisant une tour de "prilling", tour au sein de laquelle l'ADN fondu est pulvérisé dans un courant gazeux.

La première de ces techniques, qualifiée de "prilling en suspension", est notamment décrite dans la demande WO-A-99/21794, la seconde dans les demandes WO-A-97/47571 et WO-A-99/01408.

Aucune de ces deux techniques n'est pleinement satisfaisante:
- le "prilling en suspension", encore qualifié de cristallisation en voie fondue, avec un objectif granulométrique ciblé est difficile à réaliser au-delà de quelques kilogrammes par lot ;
- le "prilling" dans une tour implique la manipulation d'ADN fondu, alors que l'on connaît l'instabilité de ce composé au-delà de son point de fusion. Des phénomènes de surchauffe locale ou d'accumulation de matière sont susceptibles de générer des accidents.

Un autre procédé a été décrit dans la demande FR 2 884 244. Il permet la génération de cristaux présentant une forme cristallisée originale, plus adaptée à leur formulation, grâce à l'utilisation d'additifs (de cristallisation) modificateurs du faciès cristallin de l'ADN. Ce procédé, quoiqu'original et performant, s'est révélé difficile à transposer à l'échelle industrielle. Des cristaux obtenus par ledit procédé sont montrés sur la figure 1B annexée (photographie prise au microscope optique à transmission). Ils présentent un rapport d'allongement inférieur ou égal à 5.

Dans un tel contexte, en référence au problème technique de la formulation des cristaux d'ADN, la Demanderesse propose une solution tout à fait originale et inventive, se démarquant des préjugés de l'homme du métier faisant état de l'impossibilité d'obtenir par simple cristallisation des cristaux d'ADN (quasi) sphériques à granulométrie adaptée à la formulation des matériaux énergétiques. Cette solution ne repose pas sur un conditionnement des cristaux bruts ni sur la cristallisation en présence d'un élément chimique ajouté modificateur du faciès cristallin mais sur une maîtrise des paramètres de la croissance cristalline, aboutissant à des cristaux (quasi) sphériques (sphériques ou quasi sphériques) à gamme granulométrique choisie, pouvant aller de quelques microns à plusieurs centaines de microns.

Modifier les paramètres de croissance cristalline pour générer des cristaux sous une forme cristallisée originale n'est pas une opération innovante en elle-même. Les paramètres en cause, tels la nature du solvant, notamment sa viscosité pour piloter les vitesses relatives de transfert et d'intégration des atomes au cristal, les cycles de température pour déplacer l'équilibre de la solution sur le diagramme de solubilité, la présence d'impuretés, l'agitation... sont connus de l'homme de l'art. La modification desdits paramètres n'a toutefois jamais été décrite, encore moins maîtrisée, à la connaissance de la Demanderesse, dans le contexte de l'ADN, en référence au problème technique de sa formulation.

Dans ce contexte particulier, les inventeurs ont montré, de façon tout à fait surprenante, qu'il est possible d'intervenir sur le procédé de cristallisation de l'ADN, en vue de réduire le rapport d'allongement des cristaux et de maîtriser leur granulométrie.

Selon son objet, la présente invention concerne donc un procédé de cristallisation, par nucléation spontanée et croissance cristalline, du dinitroamidure d'ammonium (ammonium dinitramide = ADN), à partir d'une solution renfermant ledit ADN en solution dans un solvant. Ledit procédé est caractérisé en ce que ledit solvant a une viscosité supérieure ou égale à 0,25 Pa.s (250 cP), lors de la mise en oeuvre de ladite nucléation spontanée.

De façon nullement limitative, on peut préciser ici que ladite nucléation spontanée du procédé de cristallisation de l'invention a généralement lieu au sein d'un solvant qui présente une viscosité comprise entre 0,25 Pa.s (250 cP) et 1 Pa.s (1000 cP). Avantageusement, ladite viscosité du solvant est comprise entre 0,3 Pa.s (300cP) et 0,65 Pa.s (650 cP) ; très avantageusement, elle est comprise entre 0,45 Pa.s (450 cP) et 0,55 Pa.s (550 cP).

Les valeurs de viscosité indiquées ci-dessus (en Pa.s et cP (centiPoises)) sont des valeurs mesurées avec un viscosimètre Brookfield.

Le procédé de cristallisation de l'invention ne requiert donc pas d'ensemencement. Il est mis en oeuvre à partir, simplement, de la solution renfermant l'ADN en solution dans un solvant. La nucléation en cause est spontanée.

De façon caractéristique, dans le cadre de la mise en oeuvre du procédé de l'invention, les cristaux d'ADN apparaissent en milieu visqueux (voir ci-dessus). Lesdits cristaux d'ADN apparaissent, croissent (en une ou plusieurs étapes (voir plus loin)) et sont récupérés (petits ou plus gros (voir plus loin)) dans un tel milieu.

De façon caractéristique, du fait de la viscosité du solvant lors de la cristallisation, la croissance cristalline a lieu en régime majoritairement diffusionnel (c'est-à-dire que le transfert de la matière pour la croissance cristalline est le phénomène limitant de ladite croissance cristalline, transfert de matière pouvant être exprimé par le nombre de Sherwood) et ce, dès le début de ladite croissance cristalline faisant suite à la nucléation spontanée. Les inventeurs ont montré que cette maîtrise de la croissance cristalline en régime diffusionnel conduit à des cristaux (quasi) sphériques d'une granulométrie intéressante (et également, dans une certaine mesure, maîtrisable : voir plus loin). Pour une telle maîtrise, on gère donc, selon l'invention, le paramètre viscosité du solvant dès la nucléation spontanée.

Le procédé d'obtention de cristaux d'ADN de l'invention comprend une cristallisation "originale" (une telle cristallisation a lieu en régime majoritairement diffusionnel, en milieu visqueux, et ce dès la nucléation spontanée) dans une méthode de cristallisation *per se* classique. En effet, ladite nucléation et la croissance des cristaux qui suit résultent de méthodes classiques : augmentation de la concentration en ADN au sein de la solution (suite à une évaporation du solvant par exemple) et/ou ajout d'un non-solvant de l'ADN dans ladite solution et/ou refroidissement de ladite solution. On met avantageusement en oeuvre l'une de ces méthodes mais il n'est pas exclu d'en mettre en oeuvre au moins deux, successivement ou conjointement.

La cristallisation par refroidissement est la méthode de cristallisation préférée. Ainsi, dans le cadre du procédé de l'invention, l'étape de nucléation fait-elle avantageusement suite à une étape de refroidissement de la solution (qui renferme l'ADN en solution dans le solvant).

L'homme du métier maîtrise parfaitement la mise en oeuvre de telles méthodes de cristallisation par refroidissement. L'équilibre de la solution est déplacé suivant, successivement, les zones de solubilité, métastable et de nucléation spontanée de la solution.

Le solvant en cause dans le procédé de l'invention est bien évidemment un solvant de l'ADN. Il est *a priori* choisi parmi les solvants de cristallisation de l'ADN, connus. Il doit présenter la viscosité requise à la température de nucléation de l'ADN en solution dans ledit solvant.

Ledit solvant est généralement choisi parmi les solvants protiques polaires, et leurs mélanges (en visant la plage de viscosité souhaitée dans le contexte de l'invention). Ledit solvant est avantageusement un alcool, par exemple le glycérol, le 1,4-butanediol ou un mélange d'alcools, notamment un mélange de glycérol et de 1,4-butanediol. Dans le contexte de l'invention, on préconise tout particulièrement l'utilisation d'un mélange à 50% en volume de glycérol et 50 % en volume de 1,4-butanediol.

Selon la variante de mise en oeuvre préférée du procédé de l'invention, l'ADN brut est mis en solution à chaud (typiquement 60°C) dans un tel solvant, puis la température de la solution est abaissée ; la viscosité du solvant augmentant avec le refroidissement. La solution est agitée pour permettre son homogénéisation et éviter la décantation des cristaux. L'agitation de la solution peut aussi permettre, par fluidisation rhéologique, de refroidir le solvant en dessous de son point de température de solidification, pour atteindre la gamme de viscosité dudit solvant requise par le procédé de l'invention. La cristallisation de l'ADN en solution ne doit démarrer que lorsque la viscosité du solvant a atteint la gamme requise par le procédé.

Les inventeurs ont par ailleurs identifié un paramètre supplémentaire de réglage de la température de nucléation de l'ADN en solution, permettant d'élargir la zone métastable de la solution, et donc de donner plus de latitude dans le choix du solvant à viscosité adaptée (viscosité généralement comprise entre 250 et 1000 cP lors de la cristallisation de l'ADN). Ainsi, la présence d'ions nitrate (NO₃⁻) (généralement entre 0,1 et 0,5 % en masse, c'est-à-dire à faible taux), abaisse la température de nucléation de l'ADN, c'est-à-dire augmente la largeur de la zone métastable de la solution (comparaison pour une vitesse de refroidissement donnée). La température de nucléation de l'ADN en solution peut donc être ainsi ajustée (typiquement entre 20°C et 0°C) par la présence d'ions nitrate de façon à correspondre à une température suffisamment basse pour que le solvant ait la viscosité requise pour la mise en oeuvre du procédé. Les ions nitrate peuvent être contenus en tant qu'impuretés dans la matière ADN brute apportée à la solution, et/ou ajoutés séparément dans ladite solution, avantageusement par ajout, dans la solution, de nitrate d'ammonium.

Lorsque le procédé de l'invention, selon une première variante, comprend principalement un refroidissement continu de la solution et une phase de croissance des cristaux (refroidissement qui permet d'atteindre la nucléation spontanée et qui est avantageusement suivi d'un maintien à la température de nucléation, malgré le dégagement de chaleur, pour un maintien avantageux de la viscosité pendant la génération des cristaux), les cristaux obtenus présentent un rapport d'allongement médian compris entre 1 et moins de 1,5. Leur diamètre médian est typiquement inférieur à 100 µm. Il s'agit de petits cristaux facetés, dont les différentes faces se sont développées à la même vitesse, ce qui leur confère une géométrie (quasi) sphérique.

Les inventeurs ont aussi démontré que, lorsque la méthode de cristallisation en cause est également basée sur le refroidissement de la solution, l'application d'un cycle thermique imposé à la solution permet d'obtenir des cristaux de plus grosse granulométrie, particulièrement adaptée à la formulation de matériaux énergétiques. Lesdits cristaux présentent également un rapport d'allongement médian compris entre 1 et moins de 1,5. Leur diamètre médian est supérieur ou égal à 100 µm, typiquement compris entre 100 µm et 400 µm. Il s'agit de plus gros cristaux (quasi) sphériques.

Le paramètre "rapport d'allongement", utilisé en référence aux cristaux obtenus par le procédé de l'invention, est défini comme le rapport, pour un cristal, de son diamètre de Féret maximum sur son diamètre de Féret minimum ; ledit diamètre de Féret maximum correspondant à la distance maximale entre deux tangentes parallèles sur des côtés opposés du cristal et ledit diamètre de Féret minimum correspondant à la distance minimale entre deux tangentes parallèles sur des côtés opposés du cristal.

Le cycle thermique imposé mentionné ci-dessus est réalisé en quatre étapes :
- une première étape de refroidissement imposé de ladite solution qui permet de traverser la zone métastable jusqu'à la zone thermodynamique de nucléation spontanée ;
- une deuxième étape de nucléation spontanée et croissance cristalline pour la génération de petits cristaux à température imposée constante jusqu'au retour à l'équilibre de la solution sur la courbe de solubilité ; (ces deux premières étapes correspondent au procédé de l'invention selon la première variante ci-dessus)
- une troisième étape comprenant un réchauffement imposé de la solution chargée en petits cristaux en restant dans la zone métastable pour une dissolution partielle desdits petits cristaux suivi d'un maintien à une température d'équilibre thermodynamique de la solution ; puis
- une quatrième étape de refroidissement imposé continu en restant dans la zone métastable de la solution pour la génération de plus gros cristaux.

Ainsi donc, le procédé de l'invention peut-il avantageusement comprendre :
- ladite première étape de refroidissement ;
- ladite seconde étape de nucléation spontanée et de génération de petits cristaux ;
- la récupération desdits petits cristaux (première variante dudit procédé) ou ladite troisième étape de dissolution partielle par réchauffement desdits petits cristaux puis de maintien à une température d'équilibre thermodynamique ; troisième étape suivie de
- ladite quatrième étape de refroidissement pour la génération de plus gros cristaux ; et
- la récupération desdits plus gros cristaux (seconde variante du procédé de l'invention).

La récupération des cristaux est généralement mise en oeuvre par filtration.

On comprend que, de manière générale, la spécificité dudit procédé s'exprime en première partie de la seconde étape et avantageusement en première partie de la seconde étape et en fin de la première étape (refroidissement).

Par ailleurs, de manière générale et plus particulièrement dans un contexte de mise en oeuvre du procédé de l'invention avec application du cycle thermique précisé ci-dessus (seconde variante conduisant à de gros cristaux), les conditions d'agitation sont opportunément appropriées afin d'éviter la décantation rapide des plus gros cristaux pendant leur phase de croissance, tout en limitant le cisaillement en bout de pâle. Un tel cisaillement est évidemment néfaste puisqu'il entraîne des brisures de cristaux. On note toutefois qu'une certaine abrasion desdits cristaux contribue avantageusement à l'obtention de cristaux (quasi) sphériques. Le réglage des conditions d'agitation dépend des propriétés exactes de la solution, des paramètres géométriques de l'appareillage (forme et volume de la cuve contenant la solution, géométrie de l'agitateur), et est effectué au cas par cas. Ce réglage et son optimisation sont à la portée de l'homme du métier. On peut indiquer que le procédé de cristallisation de l'invention est avantageusement mis en oeuvre en milieu (visqueux) agité laminaire.

Les cristaux d'ADN obtenus par le procédé décrit ci-dessus (procédé de cristallisation en solution avec nucléation et croissance cristalline dans un solvant à forte viscosité) présentent une forme cristallisée intéressante. Lesdits cristaux se caractérisent par un rapport d'allongement médiancompris entre 1 et moins de 1,5.

Lesdits cristaux d'ADN, présentant un tel rapport d'allongement, peuvent notamment présenter un diamètre médian inférieur à 100 µm (petits cristaux à facettes susceptibles d'être obtenus selon la première variante de procédé précisée ci-dessus) ou un diamètre médian supérieur ou égal à 100 µm, typiquement compris entre 100 et 400 µm (cristaux (quasi) sphériques susceptibles d'être obtenus selon la seconde variante du procédé précisée ci-dessus). Sont particulièrement préférés, lesdits cristaux présentant un diamètre médian compris entre 100 et 400 µm.

A la lecture de ce qui précède, l'homme du métier a d'ores et déjà compris le grand intérêt de ces cristaux d'ADN pour une utilisation dans l'élaboration de matériaux énergétiques, notamment de type propergol ou explosif.

Les matériaux énergétiques, renfermant des charges énergétiques dans un liant, énergétique ou non, dont au moins une partie (voire la totalité) desdites charges énergétiques consiste en des cristaux tels que décrits ci-dessus (tels qu'obtenus par le procédé décrit ci-dessus), constituent ainsi un débouché intéressant pour lesdits cristaux.

Lesdits matériaux énergétiques peuvent renfermer une forte teneur en lesdits cristaux. Ainsi ils renferment avantageusement plus de 30 %, très avantageusement plus de 50 %, en masse desdits cristaux. Ils sont *a priori* susceptibles d'en renfermer jusqu'à environ 70 % en masse.

La cristallisation proposée selon l'invention permet d'obtenir des cristaux d'ADN particulièrement intéressants en ce qu'ils rendent possible l'utilisation dudit ADN dans des matériaux énergétiques à taux de charges élevées.

On se propose maintenant d'illustrer l'invention, sous ses aspects procédé et produit, sur les figures annexées et par les exemples ci-après.

La figure 1A, comme déjà précisé, montrent des cristaux d'ADN de l'art antérieur, du type "bâtonnet" ou "aiguille", observés au microscope optique à transmission.

La figure 1B, comme déjà précisé, montre des cristaux d'ADN de l'art antérieur obtenus avec additifs modificateurs de faciès (tels que décrits dans la demande FR 2 884 244), observés au microscope optique à transmission.

Les figures 2A et 2B montrent des cristaux d'ADN, obtenus à l'issue de la mise en oeuvre de l'exemple 1 ci-après, observés au microscope optique à transmission : cristaux de la figure 2A obtenus selon l'invention (avec ajout d'ions nitrates), cristaux de la figure 2B obtenus sans ajout d'ions nitrates (hors conditions de l'invention).

Les figures 3 et 4 montrent l'allure du cycle thermique de refroidissement permettant d'obtenir des cristaux d'ADN présentant une granulométrie moyenne supérieure ou égale à 100 µm.

Les figures 5A et 5B montrent, à différentes échelles, des cristaux d'ADN, de granulométrie comprise entre 100 µm et 400 µm, obtenus à l'issue de la mise en oeuvre de l'exemple 2 ci-après, observés au microscope électronique à balayage.

La figure 6 montre la courbe granulométrique des cristaux d'ADN observés sur les figures 5A et 5B, obtenus à l'issue de la mise en oeuvre de l'exemple 2.

### Exemple 1

Ce premier exemple concerne la production de petits cristaux, d'un diamètre médian avoisinant 35 µm, à l'échelle d'un réacteur de 2l.

Dans le réacteur de volume 2 l, on dissout 400 g d'ADN brut, 1,28 g de nitrates (+ 0,32 % de nitrate) apportés par du nitrate d'ammonium dans un mélange de 250 ml de 1,4-butanediol et de 250 ml de glycérol, initialement à une température 60°C.

L'agitation est réalisée au moyen d'un mobile à 4 pales de marque EKATO® de type Viscoprop. La vitesse de rotation du mobile sélectionnée est de 350 tr/min, le nombre de Reynolds d'agitation est de 186, la puissance dissipée par unité de volume (P/V) de 0,4W/l et la vitesse périphérique du mobile (Vp) de 1,46 m.s⁻¹. Le débit de pompage relatif (Qp/V) est dans ces conditions de 200%.

Ces différentes valeurs montrent que les conditions d'agitation sont théoriquement efficaces pour la mise en suspension des cristaux sans cisaillement. En outre, le choix du mobile (Ekato® Viscoprop ou Hélice Optifoil 3P ou 4P) n'est pas anodin puisque sa forme particulière permet d'agiter très efficacement des milieux visqueux avec un cisaillement modéré. Les vitesses de fluide en pied de cuve sont élevées et permettent donc une mise en suspension optimale des cristaux. Il en est de même pour les vitesses axiales de remontée du fluide à la paroi, ce qui permet un échange thermique optimal.

La solution dans le réacteur subit ensuite un refroidissement imposé continu en deux étapes : la première étape est une rampe de refroidissement imposée assez rapide d'une température de 60°C à 25°C en 1 h, la deuxième étape est une rampe de température imposée moins prononcée permettant d'atteindre la température de nucléation, de 25°C à 3°C en 1h30. Une troisième étape est constituée par un palier de température imposé à 3°C, permettant d'absorber la chaleur libérée par la nucléation afin de conserver la température basse, et ainsi la viscosité requise du solvant, pendant la croissance cristalline.

La croissance cristalline de l'ADN s'initie, en régime majoritairement diffusionnel, à la température de nucléation de 5°C. La viscosité mesurée du solvant à la température de nucléation de l'ADN est de 0,5 Pa.s (500 cP).

Lorsque la croissance cristalline est terminée, la filtration du produit est assurée par l'utilisation d'un filtre monoplaque, sous pression d'un gaz (air comprimé ou azote).

La figure 2A montre une photographie au microscope optique des cristaux d'ADN obtenus dans le cadre de cet exemple. Le diamètre médian desdits cristaux est d'environ 30 à 40 µm. L'aspect macroscopique des cristaux est arrondi, très éloigné de celui de l'ADN brut.

Il faut souligner dans le cadre de cet exemple que la présence des ions nitrate dans la solution est indispensable, lesdits ions nitrate abaissant la température de nucléation de l'ADN. Dans les mêmes conditions opératoires que ceux du présent exemple mais sans ions nitrate ajoutés à la solution, la température de nucléation de l'ADN est plus élevée, aux alentours de 20°C, température pour laquelle le solvant retenu n'est pas assez visqueux (∼ 0,18 Pa.s (180 cP)), ce qui ne permet pas d'obtenir un régime gouverné par la diffusion et donc des cristaux d'allure sphérique. La figure 2B montre ainsi des cristaux non sphériques obtenus selon le mode opératoire du présent exemple mais sans ajout d'ions nitrates.

### Exemple 2

Le présent exemple illustre la mise en oeuvre du procédé de l'invention à moyenne échelle, prouvant les potentiels industriels dudit procédé pour l'obtention de cristaux d'ADN quasi sphériques présentant un diamètre médian compris entre 100 µm et 400 µm.

Dans un réacteur de volume 5 l, on dissout 700 g d'ADN brut, 2,45 g d'ions nitrate (+ 0,35 % de nitrate) apportés par du nitrate d'ammonium, initialement à 60°C dans un mélange 50/50 en volume de 1,4-butanediol et de glycérol.

La mise en oeuvre du procédé conduisant à des cristaux de grosse granulométrie nécessite des conditions d'agitation appropriées afin d'éviter la décantation rapide des plus gros cristaux pendant leur phase de croissance. Le réglage des conditions d'agitation dépend des propriétés exactes de la solution, des paramètres géométriques de l'appareillage (forme et volume de la cuve contenant la solution, géométrie de l'agitateur) ; il est effectué au cas par cas et est à la portée de l'homme du métier. L'utilisation d'une sonde de mesure granulométrique *in situ* (du type sonde LASENTEC© *in situ* de la Société Mettler Toledo) dans le réacteur est un outil précieux pour s'assurer du bon réglage des conditions d'agitation. Ce type de mesure *in situ* permet de plus de contrôler le bon déroulement du procédé de cristallisation.

Pour le cas particulier de l'exemple décrit, le réacteur est également muni d'un mobile à 4 pales de marque EKATO® type Viscoprop et présente quatre chicanes.

En se plaçant à une vitesse d'agitation de 500 tr/min, on trouve en théorie un bon compromis entre puissance dissipée par unité de volume (> 0,5 W/L) et cisaillement modéré généré par le mobile (Vp ∼2 m.s-1).

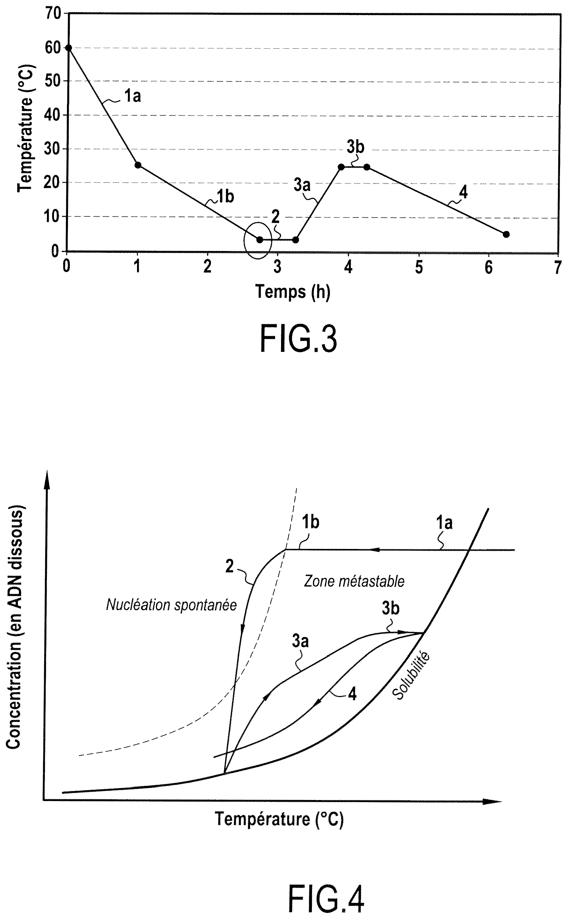

Afin d'obtenir des cristaux de plus grosses dimensions parfaitement adaptées aux matériaux énergétiques, un cycle thermique de refroidissement est appliqué à la solution, complexe mais parfaitement maîtrisable. Il comprend 4 étapes avec chacune un but précis, en ce qui concerne le contrôle de la cristallisation. Les températures imposées de conditionnement du réacteur au cours de ces 4 étapes sont montrées sur la figure 3. La figure 4 montre au cours de ces 4 étapes les états atteints par la solution sur un diagramme de solubilité.

Les 4 étapes considérées sont décrites ci-dessous.

### Etape 1 :

La première étape 1 consiste en un refroidissement imposé réalisé en deux sous étapes la et 1b.

La première sous étape (1a) correspond à une rampe de refroidissement linéaire relativement rapide (35°C/h) qui permet de gagner sur le temps global de l'opération. En effet, si la sursaturation évolue pendant ce premier refroidissement 1a, on se situe toujours dans la zone métastable.

La deuxième sous étape (1b) de refroidissement est linéaire mais avec une rampe de refroidissement moins prononcée (12,5°C/h), jusqu'à atteindre la température de nucléation spontanée. La température de nucléation spontanée est soit connue dans le cadre d'un procédé rodé soit déterminée au moyen de mesures *in situ.*

Dans le contexte du présent exemple, la nucléation spontanée débute à une température de 5-6°C. Celle-ci est relativement exothermique et soudaine et elle est donc mieux régulée si la pente de refroidissement est modérée. La viscosité mesurée du solvant à cette température de nucléation spontanée de l'ADN est de 0,5 Pa.s (500 cP).

### Etape 2 :

L'étape 2 correspond à un palier de température qui permet à la solution de revenir à l'équilibre thermodynamique. La température imposée est constante tandis que la température réelle lui est quelque peu supérieure du fait du caractère exothermique de la réaction de nucléation.

La croissance cristalline a lieu en régime majoritairement diffusionnel en raison de la viscosité du milieu, mais la nucléation se fait malgré tout de manière relativement intense et conduit à des cristaux formés très petits (< 10 µm).

### Etape 3 :

L'étape 3 est composée de deux sous étapes 3a et 3b.

L'étape 3a permet *via* un réchauffement imposé de la solution une dissolution partielle des cristaux présents dans la solution. L'étape 3b correspond à un palier de température, qui permet un retour à l'équilibre thermodynamique de la solution.

### Etape 4 :

L'étape 4 consiste en un refroidissement imposé linéaire modéré (10°C/h) pour faire croître les cristaux de manière contrôlée, tout en conservant l'équilibre de la solution dans la zone métastable, au plus près de la courbe de solubilité.

Le suivi par mesure granulométrique *in situ* confirme que la dernière pente de refroidissement (10°C/h) sert effectivement à la croissance des cristaux, que le cisaillement du mobile d'agitation est maîtrisé et que la suspension reste homogène.

Après filtration et lavages, le rendement de récupération est de l'ordre de 50%. L'aspect macroscopique des cristaux récupérés est différent de celui de l'ADN brut. L'ADN récupéré n'est pas coloré, présente un aspect moins floconneux et s'agglomère plus difficilement.

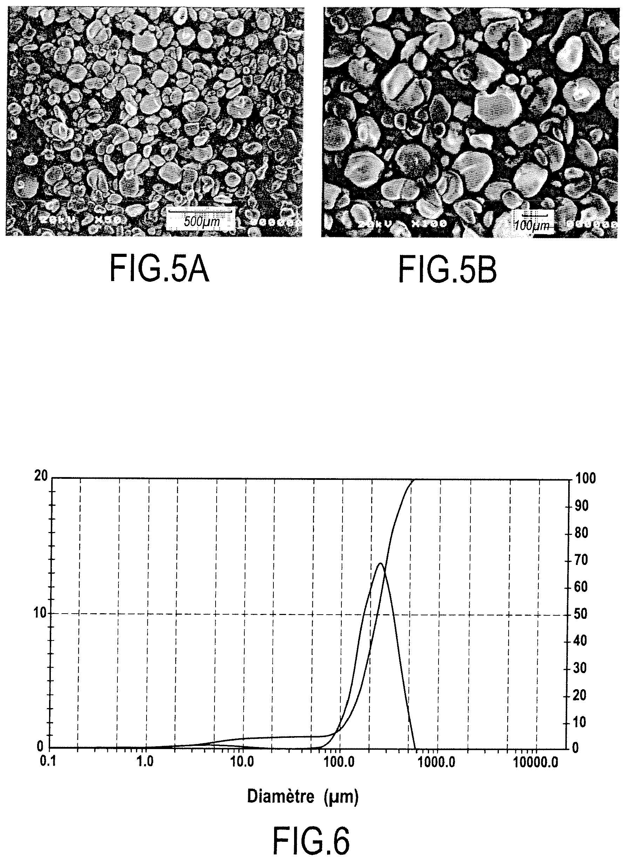

Les cristaux récupérés présentent une morphologie sphérique ainsi que le montre les photographies obtenues par microscopie électronique à balayage des figures 5A et 5B : le rapport d'allongement médian desdits cristaux est compris entre 1 et 1,5.

En référence à la figure 6, le diamètre médian (volumique) D_{V50} desdits cristaux récupérés est de 226 µm et la dispersion du produit obtenu est modérée, entre D_{V10} = 115 µm et D_{V90} = 380 µm.

## Revendications

1. Procédé de cristallisation, par nucléation spontanée et croissance cristalline, du dinitroamidure d'ammonium, à partir d'une solution renfermant ledit dinitroamidure d'ammonium en solution dans un solvant, **caractérisé en ce que** ledit solvant présente une viscosité supérieure ou égale à 0,25 Pa.s (250 cP), lors de la mise en oeuvre de ladite nucléation spontanée.

2. Procédé selon revendication 1, **caractérisé en ce que** ledit solvant présente une viscosité comprise entre 0,25 Pa.s (250 cP) et 1 Pa.s (1000 cP), avantageusement comprise entre 0,3 Pa.s (300 cP) et 0,65 Pa.s (650 cP), très avantageusement comprise entre 0,45 Pa.s (450 cP) et 0,55 Pa.s (550 cP), lors de la mise en oeuvre de ladite nucléation spontanée.

3. Procédé selon la revendication 1 ou 2, **caractérisé en ce que** ladite nucléation spontanée fait suite à une étape de refroidissement de ladite solution.

4. Procédé selon l'une quelconque des revendications 1 à 3, **caractérisé en ce que** ledit solvant est choisi parmi les solvants protiques polaires et leurs mélanges.

5. Procédé selon l'une quelconque des revendications 1 à 4, **caractérisé en ce que** ledit solvant est un mélange de glycérol et de 1,4-butanediol.

6. Procédé selon l'une quelconque des revendications 1 à 5, **caractérisé en ce que** ladite solution renfermant ledit dinitroamidure d'ammonium renferme des ions nitrate.

7. Procédé selon la revendication 6, **caractérisé en ce que** la concentration en ions nitrate de ladite solution est comprise entre 0,1% et 0,5 % en masse.

8. Procédé selon la revendication 6 ou 7, **caractérisé en ce que** lesdits ions nitrate résultent d'un apport à ladite solution de nitrate d'ammonium.

9. Procédé selon l'une quelconque des revendications 3 à 8, **caractérisé en ce qu'**il comprend les étapes successives ci-après :
- une première étape (1a + 1b) de refroidissement imposé de ladite solution jusque dans la zone thermodynamique de nucléation spontanée de ladite solution ;
- une deuxième étape (2) de nucléation spontanée et de croissance cristalline pour la génération de petits cristaux à température imposée constante jusqu'au retour à l'équilibre de la solution sur la courbe de solubilité ;
- la récupération desdits petits cristaux ou une troisième étape (3a + 3b) comprenant un réchauffement imposé (3a) de la solution chargée en petits cristaux en restant dans la zone métastable pour une dissolution partielle desdits petits cristaux suivi d'un maintien (3b) à une température d'équilibre thermodynamique de la solution ; ladite troisième étape étant suivie d'
- une quatrième étape (4) de refroidissement imposé continu en restant dans la zone métastable de la solution pour la génération de plus gros cristaux; et de
- la récupération desdits plus gros cristaux.

## Patentansprüche

1. Verfahren zur Kristallisation von Ammoniumdinitramid aus einer Lösung durch spontane Keimbildung und Kristallwachstum, umfassend das in einem Lösemittel gelöste Ammoniumdinitramid, **dadurch gekennzeichnet, dass** das Lösemittel eine Viskosität größer oder gleich 0,25 Pa.s (250 cP) aufweist, während die spontane Keimbildung stattfindet.

2. Verfahren nach Anspruch 1, **dadurch gekennzeichnet, dass** das Lösemittel eine Viskosität im Bereich zwischen 0,25 Pa.s (250 cP) und 1 Pa.s (1.000 cP), bevorzugt im Bereich zwischen 0,3 Pa.s (300 cP) und 0,65 Pa.s (650 cP), besonders bevorzugt im Bereich zwischen 0,45 Pa.s (450 cP) und 0,55 Pa.s (550 cP) aufweist, während die spontane Keimbildung stattfindet.

3. Verfahren nach Anspruch 1 oder 2, **dadurch gekennzeichnet, dass** die spontane Keimbildung auf einen Schritt zum Abkühlen der Lösung folgt.

4. Verfahren nach einem der Ansprüche 1 bis 3, **dadurch gekennzeichnet, dass** das Lösemittel ausgewählt ist aus den polaren protischen Lösemitteln und deren Gemischen.

5. Verfahren nach einem der Ansprüche 1 bis 4, **dadurch gekennzeichnet, dass** das Lösemittel ein Gemisch aus Glycerin und 1,4-Butandiol ist.

6. Verfahren nach einem der Ansprüche 1 bis 5, **dadurch gekennzeichnet, dass** die Lösung, umfassend das Ammoniumdinitramid, Nitrationen umfasst.

7. Verfahren nach Anspruch 6, **dadurch gekennzeichnet, dass** die Nitrationenkonzentration der Lösung im Bereich zwischen 0,1 % und 0,5 Gew.-% liegt.

8. Verfahren nach Anspruch 6 oder 7, **dadurch gekennzeichnet, dass** die Nitrationen aus einer Zugabe zur Ammoniumnitratlösung resultieren.

9. Verfahren nach einem der Ansprüche 3 bis 8, **dadurch gekennzeichnet dass** es die nachfolgenden Schritte umfasst:
- einen ersten Schritt (1a + 1 b) zum kontrollierten Abkühlen der Lösung bis in die thermodynamische Zone der spontanen Keimbildung der Lösung,
- einen zweiten Schritt (2) zur spontanen Keimbildung und zum Kristallwachstum für die Erzeugung von kleinen Kristallen bei einer konstanten Solltemperatur bis zur Rückkehr zum Lösungsgleichgewicht auf der Löslichkeitskurve,
- das Gewinnen der kleinen Kristalle oder einen dritten Schritt (3a + 3b), umfassend eine kontrollierte Erwärmung (3a) der Lösung, die mit kleinen Kristallen beladen ist, wobei die metastabile Zone für eine teilweise Auflösung der kleinen Kristalle beibehalten wird, gefolgt von einem Halten (3b) auf einer thermodynamischen Gleichgewichtstemperatur der Lösung, wobei auf den dritten Schritt ein
- ein vierter Schritt (4) zum kontinuierlichen kontrollierten Abkühlen folgt, wobei die metastabile Zone der Lösung beibehalten wird, für die Erzeugung von größeren Kristallen, und zum
- Gewinnen der größeren Kristalle.

## Claims

1. A method for crystallizing ammonium dinitramide, through spontaneous nucleation and crystal growth, from a solution containing said ammonium dinitramide in solution in a solvent, **characterized in that** said solvent has a viscosity greater than or equal to 0.25 Pa.s (250 cP) when said spontaneous nucleation is implemented.

2. The method as claimed in claim 1, **characterized in that** said solvent has a viscosity between 0.25 Pa.s (250 cP) and 1 Pa.s (1000 cP), advantageously between 0.3 Pa.s (300 cP) and 0.65 Pa.s (650 cP), very advantageously between 0.45 Pa.s (450 cP) and 0.55 Pa.s (550 cP), when said spontaneous nucleation is implemented.

3. The method as claimed in claim 1 or 2, **characterized in that** said spontaneous nucleation is subsequent to a step of cooling said solution.

4. The method as claimed in any one of claims 1 to 3, **characterized in that** said solvent is chosen from polar protic solvents and mixtures thereof.

5. The method as claimed in any one of claims 1 to 4, **characterized in that** said solvent is a mixture of glycerol and 1,4-butanediol.

6. The method as claimed in any one of claims 1 to 5, **characterized in that** said solution containing said ammonium dinitramide contains nitrate ions.

7. The method as claimed in claim 6, **characterized in that** the nitrate ion concentration of said solution is between 0.1% and 0.5% by weight.

8. The method as claimed in claim 6 or 7, **characterized in that** said nitrate ions are the result of ammonium nitrate being introduced into said solution.

9. The method as claimed in any one of claims 3 to 8, **characterized in that** it comprises the successive steps hereinafter:
- a first step (1a + 1b) of imposed cooling of said solution as far as into the thermodynamic zone of spontaneous nucleation of said solution;
- a second step (2) of spontaneous nucleation and crystal growth for the generation of small crystals at constant imposed temperature until a return to equilibrium of the solution on the solubility curve;
- recovery of said small crystals or a third step (3a + 3b) comprising imposed heating (3a) of the solution loaded with small crystals while remaining in the metastable zone for partial dissolution of said small crystals, followed by a hold (3b) at a temperature for thermodynamic equilibrium of the solution; said third step being followed by
- a fourth step (4) of continuous imposed cooling while remaining in the metastable zone of the solution for the generation of larger crystals; and by
- recovery of said larger crystals.
